# FASCICULE DE BREVET EUROPEEN

(11) **EP 3 295 446 B1**
(45) Date de publication et mention de la délivrance du brevet: **10.07.2019**
(21) Numéro de dépôt: 16735998.3
(22) Date de dépôt: 09.05.2016
(51) Int. Cl.: G09B 19/00, G09B 19/24, G09B 5/06, H04N 5/33, G09B 9/00, G02B 27/01

(54) **PROCÉDÉ D'APPRENTISSAGE À LA COUPE PAR COMBINAISON D'ENTITÉS DE SIMULATION AINSI QUE PLATEFORME HYBRIDE DE MISE EN OEUVRE**
VERFAHREN ZUM LERNEN VON SCHNEIDEN DURCH KOMBINATION VON SIMULATIONSENTITÄTEN UND HYBRIDIMPLEMENTIERUNGSPLATTFORM
METHOD OF LEARNING CUTTING BY COMBINING SIMULATION ENTITIES, AND HYBRID IMPLEMENTATION PLATFORM

(30) Priorité: 11.05.2015 FR 1500971
(43) Date de publication de la demande: 21.03.2018
(73) Titulaire: Agence Nationale pour la Formation Professionnelle des Adultes - AFPA, FR-93100 MONTREUIL (FR)
(72) Inventeur: ALEXANDRE, Jean Pierre, 31200 Toulouse (FR); SANCHEZ, David, 31650 Saint Orens de Gameville (FR); BAELI, Fabrice, 92210 Saint Cloud (FR)
(74) Mandataire: Junca, Eric
(86) Numéro de dépôt international: PCT/EP2016/060260
(87) Numéro de publication internationale: WO 2016/180746

(56) Documents cités:
- EP-A1- 2 863 376
- US-A1- 2014 081 459
- US-A1- 2014 272 837

## Description

### DOMAINE TECHNIQUE

L'invention se rapporte à un procédé d'apprentissage à l'utilisation sécuritaire de machines stationnaires de coupe, en particulier pour différentes catégories de découpe du bois, mais aussi d'autres matériaux non métalliques: matériaux plastiques, synthétiques ou composites, panneaux de mousse rigide, etc. Ce procédé fait intervenir en interaction des entités virtuelles et réelles pour simuler la coupe tout en reproduisant les conditions réelles d'exécution d'une telle découpe. L'invention concerne également une plateforme hybride, constituant un outil de type « réalité augmentée » en combinant des moyens à réalité tangible et virtuelle, destinée à la mise en oeuvre d'un tel procédé.

Les machines stationnaires, plus particulièrement consacrées à la découpe du bois (le terme « découpe » se rapporte au résultat sur la pièce de la « coupe » opérée par la machine) - en particulier les scies à ruban ou circulaires à format, les dégauchisseuses et les toupies - permettent de réaliser des débits (débit droit, chantournement, délignage, tronçonnage, calibrage pour les scies à format et à ruban) et des usinages (dressage, toupillage, moulurage, profilage, pour les dégauchisseuses et les toupies).

Les centres de formation aux métiers de découpe de matériaux non métalliques utilisent à l'heure actuelle des ateliers pédagogiques reconstituant les postes de travail du milieu professionnel, avec les mêmes règles de sécurité que celles en vigueur dans les entreprises concernées. Un aspect est en effet la nécessité d'anticiper les situations pouvant conduire à des accidents de travail liés à l'utilisation de telles machines, en particulier par la prise en compte de la double cinématique, celle de l'outil de coupe et celle de la matière à découper qui se déplace devant l'outil de coupe de la machine.

Dans ces conditions, l'apprentissage de la coupe s'attache à enseigner progressivement l'attitude, la posture et la gestuelle que l'apprenti devra maîtriser en fonction des types de découpe de pièce et de la matière utilisée, tout en tenant compte des risques liés à chaque phase de la coupe.

### ÉTAT DE LA TECHNIQUE

Les stages de formation sont coûteux en termes de durée, de quantité de matière à découper et du nombre important de formateurs nécessaires pour permettre à l'apprenti d'intégrer progressivement une telle maîtrise de la découpe.

La durée de l'apprentissage pourrait être réduite lorsque les risques d'accident sont limités par l'aménagement de moyens de protection spécifiques à proximité des éléments de coupe des machines. De tels moyens (coques, plaques, moyens de guidage, etc.) sont par exemple décrits dans les documents de brevet US 7 984 735, US 5 38 842 ou US 5 423 359.

Cependant, ces moyens ne sont pas adaptés à l'intégration de la gestuelle et de la posture nécessaires à la gestion du danger, puisque les moyens de protection ajoutés visent à masquer la cause du risque encouru. Ces moyens de protection peuvent s'avérer efficaces dans un contexte professionnel mais ne sont pas appropriés dans un contexte d'apprentissage.

Plus récemment, une autre approche s'est développée pour proposer d'utiliser des moyens de simulation afin de reconstituer un environnement virtuel pour optimiser les conditions sécuritaires de la découpe. Une telle approche est exposée par exemple dans les documents de brevet US 20120022677 ou US 20090240482. Ces documents visent plus particulièrement à choisir la forme et la localisation de découpes optimales ou des lignes de coupe à partir de la détection de la pièce à découper, ou encore à maîtriser les zones d'interférence entre l'outil de coupe et la matière à découper.

Ces simulations ne fournissent pas de moyens d'apprentissage adaptés pour assurer une formation optimisée en temps et en moyen, tout en permettant d'intégrer la gestion du risque dans les métiers de découpe, en particulier, mais pas exclusivement, de la découpe du bois.

US20140272837 décrit un procédé d'apprentissage sur une machine stationnaire.

### EXPOSÉ DE L'INVENTION

L'invention vise précisément à fournir de tels moyens d'apprentissage sans danger d'accident tout en respectant les conditions principales d'une coupe réelle, en proposant de combiner des équipements virtuels de coupe et de résistance à la coupe avec des supports tangibles de matière à découper en liaison avec une détection de position de la matière à découper et de l'opérateur permettant de suivre, d'analyser et d'estimer le comportement de l'apprenti.

L'invention est décrite dans les revendications 1 à 21.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue en perspective d'un exemple de plateforme hybride selon l'invention;
- la figure 2, une vue supérieure de la table de coupe de la plateforme hybride de la figure 1, avant la mise en oeuvre d'un exercice de coupe;
- la figure 3, une vue en perspective d'une pièce tangible à découper dans un exercice d'apprentissage selon l'invention;
- les figures 4a et 4b, une vue perspective d'un habillage de pièce tangible (figure 4a) par des images « matière » extrudées virtuellement depuis la table de coupe et permettant de définir la dureté moyenne d'une pièce de bois en tout point à tout niveau de coupe donné (figure 4b);
- les figures 5a et 5b, une vue supérieure d'une pièce virtuelle à découper correspondant à des consigne particulières d'exercices de coupe, et une vue supérieure d'image d'habillage de pièce à découper après orientation par l'opérateur afin d'optimiser son positionnement avant la coupe ;
- les figures 6a et 6b, un exemple de lunettes de visualisation 3D et un exemple d'équipement de main, les lunettes et l'équipement étant équipés de marqueurs de position / mouvements, et
- les figures 7a à 7f, la vue supérieure schématique du plateau de coupe lors de la mise en oeuvre de phases d'exercices de coupe avec différentes machines de coupe.

### DESCRIPTION DÉTAILLÉE

Sur les différentes figures, des éléments ou parties d'éléments identiques portent une même référence. La description d'un même élément représenté dans différentes figures est renvoyée au passage qui le traite en détail.

Dans le texte, les qualificatifs « vertical », « horizontal », « supérieur », « inférieur » ou expressions équivalentes désignent la position d'un élément en utilisation conventionnelle par rapport à un repère orthonormé OXYZ définissant un axe Z parallèle à la force de gravité terrestre, et un plan XY perpendiculaire à l'axe Z.

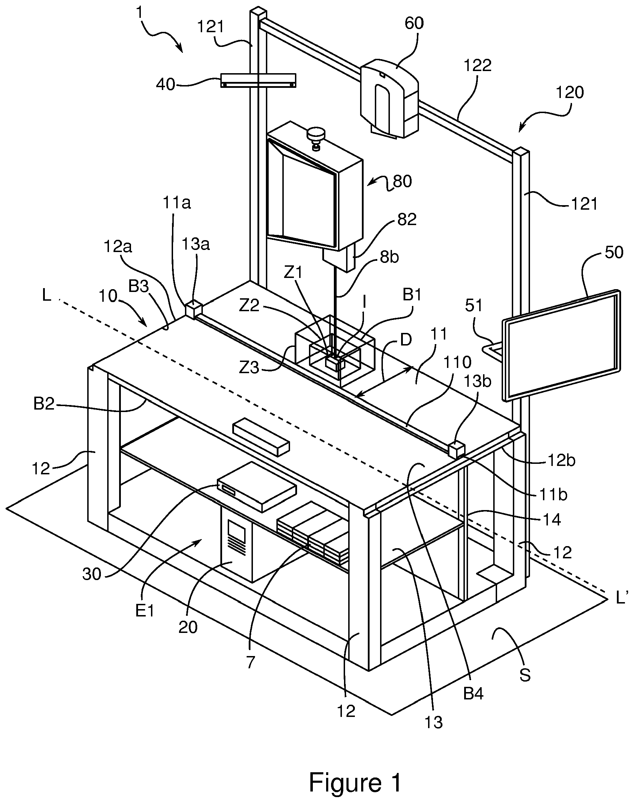

La vue en perspective de la figure 1 illustre un exemple de plateforme hybride 1 selon l'invention dédiée à l'apprentissage de la coupe de bois. Une telle plateforme comporte une table de coupe 10, formée d'un plateau de coupe rectangulaire 11 et de quatre pieds 12, et d'un portique 120 dont les mâts verticaux 121 prennent appui le long de deux des pieds 12 situés en extrémité d'un bord longitudinal B1 du plateau 11.

La table 10 possède un planche intermédiaire 13 de rangement et une planche verticale de renfort 14 s'étendant parallèlement à l'axe longitudinale LL' (parallèle à l'axe Y) du plateau 11 à une distance « D » du bord longitudinal B1 plus courte - environ 1/3 de la largeur - que celle qui la sépare de l'autre bord longitudinal B2 du plateau 11. Un guide latéral 110 de coupe est formé sur le plateau 11 à même distance D du bord longitudinal B1 que la planche de renfort 14 située sous le plateau 11. Le guide latéral 110 possède des butées qui sont associées à des ergots 11a, 11b de réglage de position, ces ergots 11a, 11b étant aptes à coulisser dans des glissières 12a, 12b formées sur les bords transversaux B3, B4 du plateau 11 selon l'axe X. Ce guide 110 permet d'assurer un déplacement en translation d'une pièce tangible 70 à découper virtuellement. Les ergots 11a, 11b servent en particulier dans l'exercice de coupe dit de « toupillage arrêté ».

De plus, une planche inférieure 15 en contact avec le sol « S » relie les extrémités des pieds 12 en appui sur le sol « S ». Dans l'espace de rangement E1 formé par les planches intermédiaire 13 et de renfort 14 sont installés un ordinateur 20 intégrant une unité de gestion numérique en connexion avec un serveur de stockage de données pédagogiques 30.

Le serveur 30 échange des données d'exercices d'apprentissage de coupe avec l'unité de gestion et délivre les pages d'un portail « formateur » via un réseau local ou Internet. L'ensemble de ces équipements électroniques et informatiques étant sensibles aux variations de la tension électrique, un onduleur est avantageusement prévu sur le circuit d'alimentation électrique.

Par ailleurs, une caméra stéréoscopique IR 40 et un écran tactile de commande et de contrôle 50 (ci-après « écran de commande ») sont fixés respectivement sur l'un et l'autre mât vertical 121 du portique 120. L'écran de commande 50 est orientable via un bras d'articulation 51. Les mâts 121 sont reliés en leurs extrémités supérieures par une poutre 122 sur laquelle est fixée un vidéoprojecteur stéréoscopique 60. Les câblages de connexion de la caméra IR 40, du vidéoprojecteur 60 et de l'écran de commande 50 à l'ordinateur 20, et de connexion de ces équipements à un réseau d'alimentation électrique passent dans la poutre 122 et les mâts 121 du portique 120.

La pièce tangible 70, posée sur le plateau 11, est destinée à être découpée virtuellement selon un exercice sélectionné par l'opérateur. Pour ce faire, l'opérateur agit sur la page de l'écran de commande 50 éditée par l'unité de gestion de l'ordinateur 20 pour sélectionner les différents paramètres définissant l'exercice: type de machine de coupe, type de coupe à effectuer, dureté du bois, pièce tangible définie par ses dimensions, paramètres de déformation du plat et du chant (pour dégauchisseuses), consignes de coupe (débit ou usinage: dimensions, profondeur de coupe, etc.), actions à réaliser, niveau d'expertise.

La pièce tangible 70 fait partie d'un jeu 7 de cinq pièces (les quatre autres pièces sont rangées dans l'espace E1) de dimensions variables et adaptées aux exercices correspondants. Pour définir les exercices de coupe, l'unité de gestion de l'ordinateur 20 intègre des bibliothèques de caractéristiques de fonctionnement, de machines stationnaires de coupe, d'organes de coupe et de différents types de bois à découper. Le bois est défini par sa texture et sa dureté qui varie en fonction de la texture.

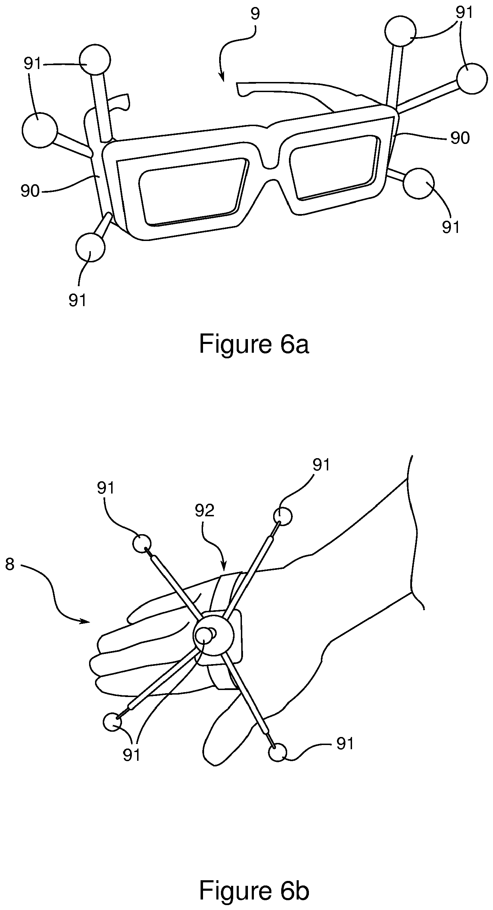

La pièce tangible 70 à découper virtuellement ainsi que la tête et les mains de l'opérateur sont équipés de marqueurs (cf. figure 6a et 6b) pour que la caméra IR 40 puisse les suivre en positions, orientations et de mouvements.

Une machine stationnaire de débit, une scie à ruban 80 dans l'exemple illustrée (seule sa partie supérieure est représentée pour simplifier la figure 1) étant sélectionnée, le vidéoprojecteur stéréoscopique 60 la projette au-dessus du plateau 11. La lame 8b de la scie 80 vient transpercer le plateau 11 au point d'impact « I » et le guide latéral de coupe 110 est reculé en position arrière sur le plateau 11. Ce ruban 8b est protégé par un organe de protection 82 réglable au cours de la coupe virtuelle. La scie à ruban 80 et ses accessoires projetés (lame 8b, organe de protection 82) sont visualisés par l'opérateur équipé de lunettes de visualisation 3D (cf. figure 6a).

L'analyse des images projetées par le vidéoprojecteur 60 telles que vues par la caméra IR 40 permet à l'unité de gestion, par conjonction de ces images avec le suivi de position et de mouvements de l'opérateur également réalisé par la caméra IR 40, d'adapter la perspective des images projetées à la position et à l'orientation de la tête de l'opérateur. La position et l'orientation de la tête de l'opérateur déterminent ainsi la combinaison des images projetées pour donner l'environnement en 3D.

Des zones de sécurité sont également projetées par le vidéoprojecteur 60 autour de la lame de coupe 8b. Alternativement, ces zones de sécurité peuvent être projetées sur et/ou devant la lame 8b. Ces zones sont adaptées en dimensions et forme à l'organe de coupe choisi pour l'exercice. Dans l'exemple, les zones de sécurité se composent de trois zones Z1, Z2 et Z3, formant trois parallélépipèdes rectangles homothétiques et centrés sur la lame de coupe 8b: la zone d'accident Z1 délimitée par lame 8b, la zone de protection Z2 délimitée par l'organe de protection 82 et englobant la zone d'accident Z1, et la zone d'alerte Z3 englobant la zone de protection Z2.

Les dimensions et la transparence de ces zones Z1 à Z3 sont des paramètres de la simulation liés à l'apprentissage: les zones sont visibles et colorées en permanence en mode « débutant » (avec un changement de couleur de la zone d'alerte Z3 en cas de franchissement), uniquement à l'approche des mains de la zone d'alerte Z3 en mode « avancé », et invisibles en mode « expert ». Une alerte visuelle est déclenchée sur l'écran de commande 50 en cas de franchissement de la zone d'alerte Z3. Dans tous les cas, l'entrée d'une main dans la zone de protection Z2 déclenche l'arrêt de l'exercice.

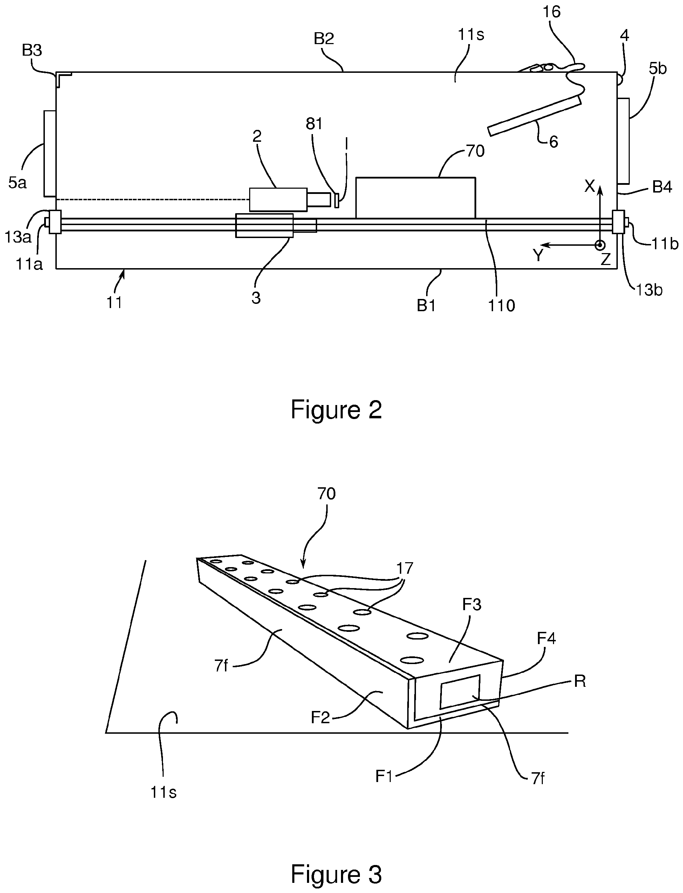

La vue supérieure du plateau de coupe 11 est illustrée sur la figure 2. Afin d'optimiser la projection stéréoscopique, le plateau 11 est recouvert d'un revêtement hautement réfléchissant, ici en matériau plastique blanc, sur sa face supérieure 11s.

De plus, un électroaimant 2 (vu en transparence) piloté par l'unité de gestion est agencé sous le plateau 11 au niveau de l'impact « I » de l'organe de coupe virtuel. L'électroaimant 2 permet de freiner simultanément les mouvements de translation dans le plan XY et de rotation selon l'axe Z de la pièce tangible 70. L'unité de gestion définit la variation de la force d'attraction et la surface d'interaction de l'électroaimant 2 avec la pièce tangible 70 en fonction des conditions de l'exercice prévu et au fur et à mesure du déroulement de l'exercice, à savoir: la force de référence à exercer par l'apprenti sur la pièce, la dureté et la quantité de matière à enlever en une fois.

En outre, un organe vibratoire 3 (vu également en transparence), ici une lame vibrante, est également agencé sous le plateau 11, à proximité de l'électroaimant 2. L'organe de vibration 3 activé avec l'électroaimant 2 et piloté en intensité de vibration par l'unité de gestion à travers la boucle de calcul de l'ordinateur 20 (figure 1). Du fait que les machines de coupe sont des machines tournantes et provoquent des vibrations par elles-mêmes et en interaction avec le bois à découper, l'organe vibratoire 3 est alors dédié à former des mouvements vibratoires du type de ceux que provoquerait la machine de coupe réelle correspondant à la machine virtuelle sélectionnée en fonction des conditions de l'exercice prévu.

Un bouton d'arrêt 4, positionné sur un bord transversal B4 du plateau 11, permet de couper l'alimentation de l'électroaimant 2 en cas d'urgence, par exemple lorsqu'une zone de sécurité proche de la lame de coupe 8b est franchie par l'opérateur. Avantageusement, l'arrêt d'urgence est intégré à la simulation. Ainsi, lorsque l'opérateur actionne le bouton d'arrêt d'urgence 4, la simulation réagit comme une machine réelle (arrêt progressif du moteur, arrêt de l'exercice, etc.).

Pour compléter le réalisme de la coupe simulée, le système est avantageusement équipé de deux haut-parleurs 5a et 5b fixés de part et d'autre du plateau 11 pour simuler le bruit de la machine. Les haut-parleurs 5a, 5b sont également pilotés par l'unité de gestion de l'ordinateur 20 en fonction de la force exercée par l'électroaimant 2 et de l'intensité des vibrations générées par l'organe de vibrations 3. Le retour sonore est ainsi intégré à la boucle de calcul de l'ordinateur 20 à partir de la mise en contact avec la lame de coupe 8b avec la pièce tangible 70, en tenant compte de la dureté du matériau à découper virtuellement, ou dès la mise en route de la machine qui communique des vibrations à la table 10 (figure 1).

De plus, l'opérateur dispose classiquement d'un poussoir 6 pour dégager les chutes virtuelles ou pousser la pièce tangible 70 pour finir le geste de coupe ou d'usinage lorsque les mains sont trop proches de l'organe de coupe 8b. Le poussoir 6 est accroché au bord B2 du plateau 11 à l'aide d'un cordon souple 16. Avantageusement, le poussoir 6 peut être pourvu de marqueurs afin de suivre sa position à l'aide de la caméra IR 40 (figure 1).

Au cours de l'exercice, la position du guide latéral 110 - avec ses butées 13a, 13b couplées aux ergots 11a, 11b - peut se dérégler du fait des efforts importants générés par l'opérateur sur la pièce tangible 70. Pour permettre à l'opérateur de les repositionner correctement, le vidéoprojecteur 60 (figure 1) projette des vues simplifiées virtuelles de ces éléments suite à une consigne précise à exécuter. L'opérateur fait alors correspondre les éléments physiques (guide 110, ergots11a et 11b) aux éléments virtuels projetés. Il est ainsi inutile de projeter de chariot de transport de pièce à découper.

La vue en perspective de la figure 3 illustre la pièce tangible 70, repérée par une étiquette numérotée « R », sur la face supérieure 11s du plateau 11 vu partiellement.

Les pièces tangibles telles que la pièce 70 ont une forme parallélépipédique et sont revêtues, sur deux faces F1 et F2 dites actives - une face F1 de plat et une face F2 de chant -, d'une couche ferromagnétique 7f. Les deux autres faces F3 et F4, respectivement opposées aux faces actives F1 et F2, sont revêtues d'une constellation de marqueurs IR 17. L'interaction entre l'électroaimant 2 et la pièce tangible 70 ne fonctionne que si l'une des faces actives F1 ou F2 est en contact avec la face supérieure 11s du plateau 11.

La quantité de marqueurs IR 17 par pièce 70 est déterminée de sorte à pouvoir garantir une continuité du suivi de position et de mouvement même lorsque les deux mains de l'opérateur cachent une partie de ces marqueurs 17.

De manière générale, les pièces à découper virtuellement 70 sont habillées par des images projetées par le vidéoprojecteur 60 en coopération avec la caméra IR 40 (figure 1) de suivi de positions, orientations et mouvements desdites pièces 70, et représentant des textures de bois définis dans la bibliothèque des matériaux.

On distingue les pièces de débit, découpées par les machines de débit - les scies à format et à ruban -, des pièces d'usinage découpées par les machines à usiner - dégauchisseuses et toupies -.

Les pièces de débit sont toujours posées sur le plat, face F1 dans l'exemple, et ne nécessitent pas de déformation virtuelle: les actions de coupe sont effectuées perpendiculairement au plateau 11 ce qui permet de travailler la pièce sur une découpe en 2D, puis de générer la 3D par extrusion.

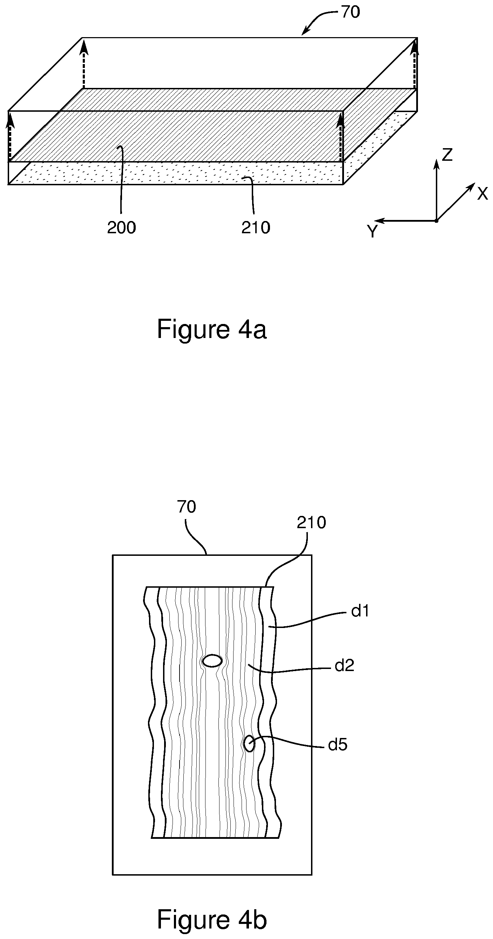

Les images « matière », encore dénommées « habillages », sont ainsi extrudées selon l'axe Z pour les pièces de débit et la figure 4a illustre une vue en perspective d'une telle image « matière » extrudée 200. L'image « matière » 200 d'une pièce de bois virtuelle respecte les dimensions de la planche tangible 70 sur laquelle elle est projetée afin d'éviter les effets visuels d'étirement lors de la projection.

A cette image « matière » 200 est associée une image « dureté » 210, répartie uniformément sur l'axe Z. Chaque pixel d'une image « dureté » 210 correspond à une valeur de dureté normalisée, ici entre d1 et d5, comme illustrée par la vue supérieure de la figure 4b.

L'intensité du retour d'effort fourni par l'électroaimant 2 (figure 2) est pondérée par la dureté de la pièce réelle à découper répertoriée dans l'exercice sélectionné. Les images extrudées permettent alors de déterminer la dureté moyenne de la pièce réelle en tout point de tout niveau de coupe virtuel déterminé par l'unité de gestion et d'en déduire la force de l'intensité de l'électroaimant 2 à appliquer.

Quant aux pièces d'usinage, elles sont posées sur le plat ou sur le chant, faces F1 ou F2 dans l'exemple, et nécessitent des déformations virtuelles (la pièce étant avivée, creuse ou tuilée). L'unité de gestion utilise une technique d'image dite de « déplacement » à partir de laquelle est générée la pièce 3D.

La pièce de bois est en fait générée à partir de deux images respectivement extrudées selon les axes Z (le plat) et X (le chant). L'extrusion est alors non-uniforme et est fonction de l'image en « déplacement ». L'usinage agit alors directement sur cette image et implicitement sur la topographie de la pièce virtuelle.

Les quatre types de pièce de bois peuvent ainsi être simulées: pièce standard (sans déformation), pièce avivée (avec des rugosités sur le plat et sur le chant), pièce tuilée (avec une flèche de déformation sur le plat dans le sens de la largeur et des rugosités sur le chant), et pièce creuse (avec une flèche de déformation sur le plat dans le sens de la longueur et des rugosités sur le chant).

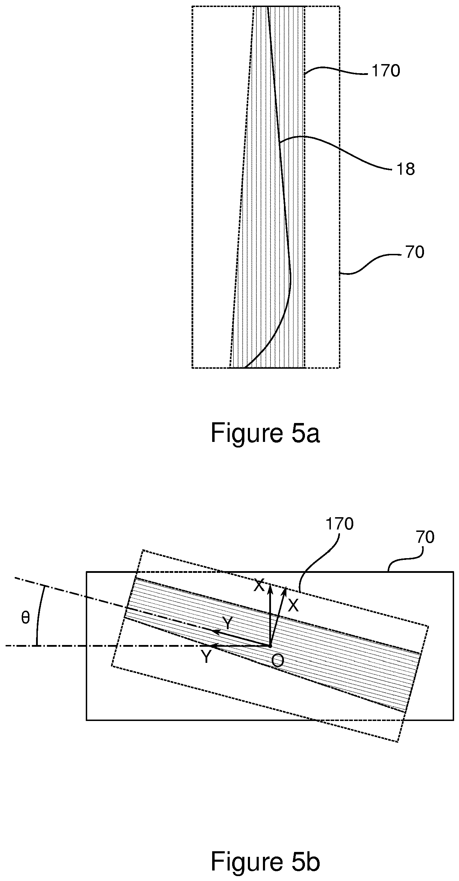

Par ailleurs, des consignes particulières peuvent être demandées par l'exercice. La vue supérieure de la figure 5a illustre une pièce virtuelle à découper d'habillage 170 sur la pièce tangible 70 indiquant une consigne de coupe pour la scie à ruban 80 (figure 1), à savoir le tracé courbe 18.

De plus, afin d'optimiser une coupe suite à la consigne de préparation d'un exercice - ici un dressage de la rive - l'opérateur peut être amené à orienter l'image « matière » 170 selon un angle θ par rapport à la pièce tangible 70, comme illustré sur la vue supérieure de la figure 5b en référence au repère XY. Pour ce faire, il modifie l'angle θ sur l'écran de commande et de contrôle 50 (figure 1).

L'exécution d'un exercice se déroule généralement en trois phases: la préparation, la réalisation et la finalisation.

La phase de préparation s'effectue sur l'écran de contrôle 50 et consiste à configurer la machine. En fonction de la machine virtuelle et du contexte de l'exercice, l'apprenti active les organes de sécurité, l'aspiration, la lumière, etc.

Lorsque le poste est correctement paramétré, la table de projection s'allume par la lumière projetée à partir du vidéoprojecteur 60 et l'apprenti est invité à s'équiper de lunettes de visualisation 3D ainsi que de traqueurs « main gauche » et « main droite ».

Les figures 6a et 6b illustrent, respectivement, un exemple de lunettes de visualisation 3D et un exemple d'équipement de main ou traqueur, les lunettes et le traqueur étant équipées de marqueurs de suivi de position / mouvements.

Ainsi, chaque charnière 90 des lunettes de visualisation 3D 9 est équipée de trois marqueurs IR 91 et chaque main 8 de l'opérateur est équipée d'un manchon « traqueur » 92 sur lequel cinq marqueurs IR 91 sont montés.

L'opérateur devrait veiller à ne pas inverser les traqueurs 92 de la main droite et celui de la main gauche, identifiés respectivement par une étiquette « droite » et « gauche ». Le traqueur de main permet ainsi à l'unité de gestion de suivre la position et le mouvement des mains en distinguant la main droite de la main gauche via la caméra IR 40 (figure 1). Les lunettes 3D à marqueurs IR 91 permettent à l'opérateur de visualiser correctement les images projetées par le vidéoprojecteur 60 (figure 1) et à l'unité de gestion de déterminer la position et l'orientation de la tête de l'opérateur via la caméra IR 40.

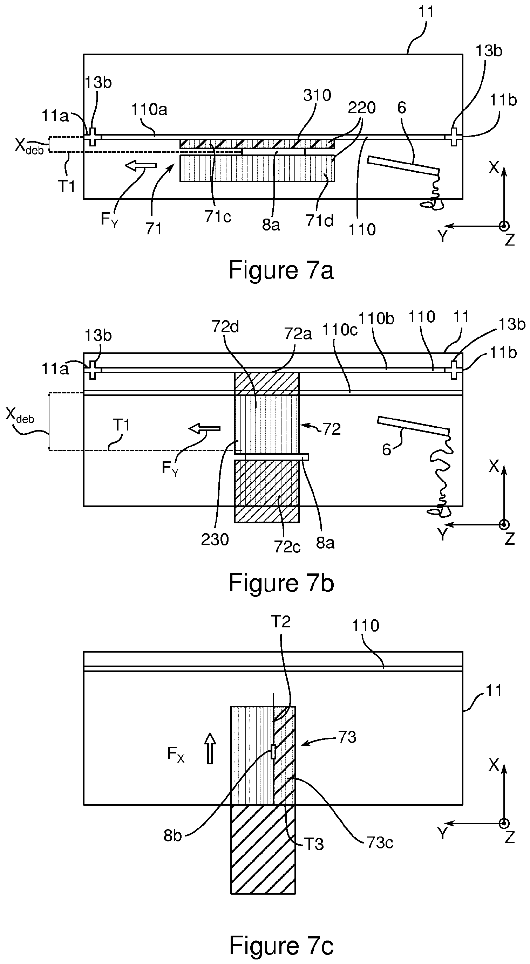

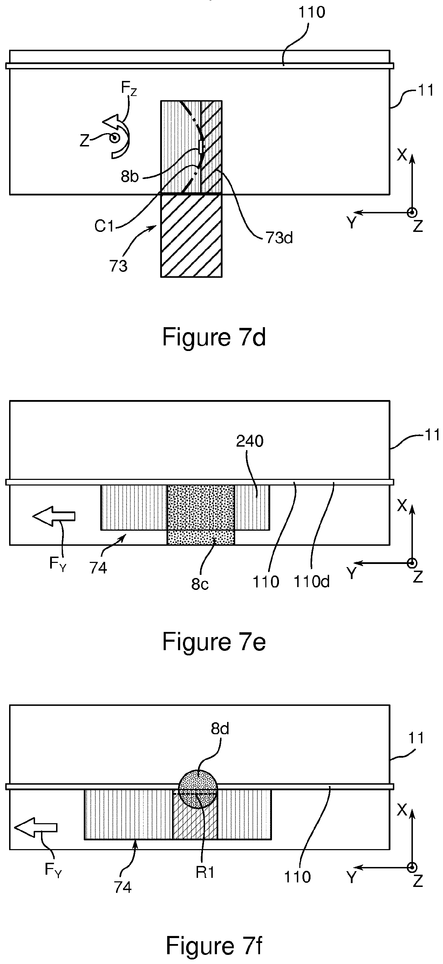

Afin d'illustrer quelques phases d'exercices de découpe avec différentes machines, les figures 7a à 7d montrent schématiquement la vue supérieure du plateau 11 de coupe lors de la mise en oeuvre de ces différentes phases. Les machines de coupe concernées sont une scie à format pour un délignage et un tronçonnage (figures 7a et 7b), une scie à ruban pour un délignage au trait et un chantournement (figures 7c et 7d), une dégauchisseuse pour le dressage d'un bois avivé (figure 7e) et une toupie pour un toupillage continu (figure 7f).

Lors de la phase de préparation, l'opérateur met en route l'aspiration et la machine, active la protection, sélectionne le bon organe de coupe et passe à l'étape suivante.

Selon l'exercice, certains réglages demandent de réaliser une action physique adaptée sur le plateau de coupe 11, en particulier le réglage du guide latéral 110, des ergots 11a, 11b et de la pièce tangible à découper 70 (figure 1). Pour cela, l'apprenti fait correspondre les éléments réels aux éléments virtuels projetés sur le plateau 11.

Durant cette phase, les positions de la pièce tangible 70, de la tête et des mains de l'opérateur sont captées. Le vidéoprojecteur 60 projette sur le plateau 11 une zone d'ombre floutée au niveau des mains, pour masquer la pièce tangible 70, et une image « matière » sur la pièce tangible 70. La coupe est réalisée dans les volumes parallélépipédiques des zones de sécurité Z1 à Z3 (figure 1).

Dans la plupart des exercices, l'opérateur peut ajuster l'orientation de coupe en retournant l'habillage de pièce de 180° si l'orientation ne correspond pas à celle définie sur l'écran de commande 50 (figure 1).

Lorsque l'exercice est terminé, l'opérateur quitte ses lunettes 3D 9 (figure 6a) et finalise l'exercice sur le l'écran de commande 50 en arrêtant la machine, l'aspiration, etc. Les résultats s'affichent sur l'écran de commande 50 (figure 1).

Plus particulièrement, les deux premiers exemples d'exercice illustrés par les vues supérieures des figures 7a et 7b concernent l'utilisation d'une scie à format pour, respectivement, un délignage et un tronçonnage.

Le délignage (figure 7a) consiste à effectuer une coupe droite à une distance X_{deb} le long d'un bord longitudinal (appelé « rive ») 310 d'une pièce tangible 71 devant être préalablement dressée.

En phase de préparation, l'opérateur oriente l'habillage de bois 220 sur l'écran de commande 50 en fonction de la lame de scie 8a afin d'optimiser le dressage de la rive. Un trait virtuel T1 est affiché sur l'écran 50 et projeté sur le plateau 11 dans le prolongement de la lame 8a. L'habillage 220 est déplacée selon l'axe X et orientée selon l'axe Z.

A l'issue de cette manipulation, l'unité de gestion détermine et mémorise la position du guide latéral 110 permettant de réaliser l'opération de « dressage » initial en faisant intervenir un guide virtuel 110a comme expliqué ci-dessous.

En phase de réalisation, le guide virtuel 110a est projeté sur le plateau 11. Après avoir chaussé les lunettes 3D 9 et enfilé les traqueurs de main 92 (figures 6a et 6b), l'opérateur superpose le guide latéral « réel » 110 et le guide virtuel 110a. Il plaque alors le chant de la pièce 71 contre le guide 110 et réalise le dressage en déplaçant la pièce 71 selon l'axe Y (flèche Fy), pour éliminer une chute virtuelle correspondant à l'aubier de la pièce tangible à l'aide du poussoir 6.

L'unité de gestion détecte la fin de la séquence via la caméra IR 40 (figure 1) et l'opérateur « repositionne » le guide latéral 110 sur le guide virtuel 110a. Après serrage des butées 13a, 13b sur les ergots 11a et 11b, l'opérateur plaque la pièce tangible 71 contre le guide 110 et exécute le délignage en déplaçant la pièce tangible 71 selon l'axe Y (flèche Fy) en s'aidant du poussoir 6. L'opérateur évacue ensuite la pièce virtuelle débitée 71c (située entre la lame 8a et le guide 110), puis replace virtuellement la pièce résiduelle 71d en amont de la lame 8b dans l'unité de gestion via l'écran de commande 50 (figure 1). En fin d'exercice, l'opérateur retire les équipements de suivi, range la pièce tangible 71 et revient sur l'écran de commande 50 pour finaliser l'exercice.

Dans le cas du tronçonnage (figure 7b) sur une distance X'_{deb} de pièce tangible 72, l'unité de gestion utilise le guide latéral 110 pour simuler le chariot de transport de pièce en servant d'appui et ainsi faciliter la translation de la pièce tangible 72 selon l'axe 0Y (flèche Fy). Deux guides virtuels 110b et 110c sont projetés, l'un (110b) sur la position du guide latéral réel 110 et l'autre (110c) à l'emplacement de la position de l'habillage 230. Cette disposition permet avantageusement de parfaire le placement du guide latéral tangible 110 et de s'affranchir du porte-à-faux.

Cette séquence consiste à positionner l'habillage 230 en fonction de celle de la lame 8a afin d'optimiser le dressage initial de la rive. Pour aider au positionnement de l'habillage 230, un trait virtuel T'1 est affiché sur l'écran 50 et projeté dans le prolongement de la lame 8a.

L'opérateur peut déplacer l'habillage 230 selon l'axe X et l'orienter selon l'axe Z dans une phase de préparation. A l'issue de cette manipulation, l'unité de gestion détermine et mémorise la position du guide virtuel 110c et celle du guide réel 110 puis projette les guides virtuels 110b et 110c pour aider au placement du guide latéral 110 dans la phase de dressage initial, similaire à celle de l'exemple de délignage précédent. L'opérateur superpose alors le guide réel 110 au guide virtuel 110b. Il plaque ensuite le bord transversal 72a de la pièce tangible 72 contre le guide latéral 110. L'opérateur réalise alors le dressage selon l'axe Y (flèche Fy). Il place ensuite le guide latéral 110 en superposition du guide virtuel 110c à l'aide du serrage des ergots 11a, 11b et réalise alors le tronçonnage en déplaçant la pièce 72 selon l'axe Y (flèche Fy) en s'aidant du poussoir. L'opérateur évacue ensuite la pièce virtuelle débitée 72c, puis replace virtuellement la pièce résiduelle 72d en amont de la lame 8a dans l'unité de gestion via l'écran de commande 50 (figure 1).

Les deux exemples d'exercice suivants, illustrés par les vues supérieures des figures 7c et 7d, concernent l'utilisation d'une scie à ruban pour, respectivement, un délignage au trait et un chantournement (figure 7d).

Concernant le délignage au trait T2 (figure 7c), l'opérateur positionne la pièce tangible 73 face à la lame 8b et l'aligne au trait T2. L'opérateur réalise alors le sciage complet selon l'axe X (flèche Fx) puis repositionne la pièce tangible 73 en amont de la lame 8b.

L'unité de gestion via la caméra IR 40 détecte la fin de cette première séquence et affiche le deuxième trait T3 de coupe. L'opérateur réalise le deuxième sciage en suivant le trait T3. Une fois le second sciage effectué, l'opérateur éjecte la chute virtuelle 73c puis repositionne la pièce tangible 73 en amont de la lame 8b.

S'agissant du chantournement (par une combinaison de sciage linéaire selon Fx et en rotation selon Fz autour d'un axe parallèle à l'axe Z sur la figure 7d), l'opérateur suit le trait d'une courbe C1 dont le rayon garde le même signe. L'opérateur positionne la pièce tangible 73 à chantourner à la lame 8b. L'opérateur réalise alors le sciage complet et repositionne la pièce tangible 73 en amont de la lame 8b pour effectuer un délignage au trait et éliminer virtuellement la chute 73d.

Avec une dégauchisseuse, l'exercice qui suit (figure 7e) se rapporte au dressage d'un bois avivé par usinage (et, de façon équivalente, au dressage d'une pièce tuilée ou creuse, en informant l'unité de gestion de la position idéale de la pièce).

Lors de la phase de préparation, l'opérateur configure la profondeur de passe sur l'écran de commande 50 en fonction de la valeur de rugosité de l'habillage 240 proposé. Le vidéoprojecteur 60 projette alors le guide virtuel 110d et l'opérateur superpose le guide latéral réel 110 au guide virtuel 110d. Il pose à plat la pièce tangible 74 sur le plateau 11 et plaque le chant de cette pièce contre le guide latéral 110. L'usinage est réalisé en exerçant un effort selon l'axe Y (flèche Fy) par passage sur l'outil de coupe 8c tournant autour d'un axe parallèle à l'axe X. Lorsque l'opérateur a terminé la première « passe », il vérifie l'état de surface de la pièce tangible 74 en aval de l'outil de coupe 8c de IIa façon suivante.

En soulevant légèrement la pièce tangible 74, l'opérateur indique à l'unité de gestion qu'il souhaite visualiser l'habillage du « dessous » de la pièce usinée. Une image « matière » du résultat est alors projeté. En fonction de la qualité de l'état de surface estimée, l'opérateur choisit alors d'effectuer une nouvelle passe ou de finaliser l'exercice par un dressage du chant. Entre chaque passe, l'opérateur peut modifier la profondeur de passe sur l'écran de commande 50.

Le dressage du chant est effectué de façon équivalente au dressage de rive en plaquant la rive contre le guide latéral110.

Le dernier exemple d'exercice se rapporte à un toupillage en continu (figure 7f). La toupie dispose d'un double organe de coupe 8d qui tourne sur un axe parallèle à Z et permet de réaliser une rainure R1. L'opérateur pose la pièce tangible 74 à plat sur le plateau 11 puis la plaque sur chant contre le guide latéral 110. L'usinage est réalisé selon l'axe Y (flèche Fy) en passant devant l'outil de coupe 8d. Lorsque l'opérateur a terminé l'usinage, il repositionne la pièce 74 en amont du double organe de coupe 8d, la pièce restant à plat sur le plateau 11.

L'invention n'est pas limitée aux exemples de réalisation décrits et représentés. Ainsi, le niveau d'apprentissage de l'opérateur pour un exercice donné peut être évalué par une analyse de l'exécution de cet exercice. L'analyse est effectuée sur la base de taux de réussite de critères de régularité de coupe, de vitesse d'exécution, de positionnement de l'opérateur, en particulier de ses mains, par rapport à un positionnement idéal et le respect sécuritaire au regard de la proximité de ses mains aux zones de sécurité Z1 à Z3.

Ainsi, la régularité de la coupe peut être évaluée en comparant la trajectoire idéale à celle imprimée par l'organe de coupe sur la pièce.

Pour un exercice donné, elle peut être échantillonnée sur l'ensemble de la coupe et correspond à la moyenne de la distance entre le centre de l'organe de coupe et la position idéale.

Pour les exercices d'usinage, ce critère peut correspondre à la distance maximale de la pièce tangible au guide latéral et permettre de déterminer si l'opérateur appuie correctement la pièce sur le guide latéral.

De plus, la vitesse de déplacement correspond à la vitesse de déplacement de la pièce tangible manipulée par l'opérateur. Par ce critère, l'unité de gestion contrôle la valeur et la constance de la vitesse sur l'ensemble d'un exercice.

Quant à la position des mains, elle est évaluée en comparant la position idéale à celle de l'opérateur et est échantillonnée sur l'ensemble de la coupe. Le critère peut se baser sur un intervalle de tolérance qui traduit la dérive maximale entre le centre de la main et la position idéale.

La phase d'évaluation du système permettra d'analyser la précision du suivi de l'orientation des mains de l'opérateur. L'orientation des mains peut être évaluée pour qualifier plus finement le geste.

Enfin, pour le respect de la zone de protection, ce critère peut définir le coefficient d'homothétie à appliquer à la zone de protection Z2 pour obtenir la zone d'accident Z1 (tolérance inférieure) et la zone d'alerte Z3 (tolérance supérieure). En évaluant la distance entre les mains et la zone de protection Z2, le système fournit des indicateurs sur les gestes de l'opérateur en termes de sécurité.

Pour simplifier les projections, il est possible de ne projeter que la zone d'alerte Z3 en 2D (deux dimensions) sur le plateau de la table de coupe.

En outre, les moyens de réglage en position du guide latéral décrits, à savoir les ergots et les butées, peuvent être remplacés par tout moyen connu, par exemple crochets, bagues, tiges crantées, etc.

Par ailleurs, des aides visuelles à la coupe peuvent être projetés par le vidéoprojecteur. L'assistance se manifeste par l'affichage de guides visuels (flèches, informations) et/ou par la désactivation de certaines étapes de configuration de la machine. Par exemple, en mode « débutant », l'opérateur n'a pas à gérer la mise en route/l'arrêt de la machine et passe directement à l'exécution du geste de coupe attendu, le vidéoprojecteur projetant sur le plateau la position idéale des mains (« guidage explicite »). En mode « avancé », l'opérateur ne peut pas exécuter le geste de coupe tant que la configuration n'est pas complète (« guidage implicite »). Enfin, en mode « expert », si l'opérateur choisit d'exécuter un geste de coupe alors que la machine n'est pas entièrement paramétrée, l'exercice s'arrêté (« aucune assistance »).

En outre, pour masquer la pièce à découper, alternativement à la projection d'une zone floutée au niveau des mains durant une phase de réglage, un traitement de soustraction d'images des mains de l'opérateur peut être réalisé dans l'imagerie de suivi par l'unité de gestion numérique pour masquer la pièce à découper image par image.

De plus, outre le suivi des mains et de la tête, il est possible de prévoir une caméra qui capte le la silhouette de l'opérateur sans marqueurs (même principe que la « Kinect » de contrôle des jeux vidéo) afin de suivre la posture de l'opérateur dans son ensemble et de la restituer sous forme d'un squelette filaire.

Par ailleurs, il est possible de prévoir une communication de données entre plusieurs unités de gestion, chacune étant située sur une plateforme, et un serveur unique et de délivrer les pages du portail « formateur » sur tout ordinateur ou terminal via un réseau local ou Interne et un protocole d'accès pour un échange de données, par exemple pour stocker des données de résultats de compétence sur le serveur.

Cette communication peut être choisie entre un mode autonome, dans lequel l'unité de gestion et le serveur dédié sont accueillis sur un même site informatique, un mode connecté pour plusieurs unités de gestion dans lequel un site fonctionne en mode autonome et les autres unités de gestion sont connectées au serveur via un réseau local et Internet (ou uniquement le réseau local ou uniquement Internet), et un mode serveur dans lequel le serveur communique avec les unités de gestion via un réseau local et Internet (ou uniquement le réseau local ou uniquement Internet).

## Revendications

1. Procédé d'apprentissage à la coupe de matériaux non métalliques par une machine stationnaire, comportant les étapes suivantes:
- un exercice de coupe étant sélectionné dans une unité de gestion numérique, une machine stationnaire virtuelle (80), choisie dans une bibliothèque de machines de l'unité de gestion avec un organe de coupe approprié (8a à 8d), est projetée (60) en stéréoscopie sur une table de coupe (10) et vue par un opérateur équipé en visualisation tridimensionnelle 3D;
- conformément à l'exercice, une pièce tangible (70 à 74) à découper virtuellement, détectable en position et comportant au moins une face d'interaction magnétique (F1, F2), est constituée virtuellement d'un matériau choisi dans une bibliothèque de matériaux de l'unité de gestion, les matériaux étant définis au moins par une image de dureté (210);
- la pièce tangible à découper virtuellement (70 à 74) et l'opérateur sont équipés (91) pour être captés en imagerie stéréoscopique (40) de suivi de positions, orientations et mouvements;
le procédé d'apprentissage étant **caractérisé en ce qu'**il comporte les étapes suivantes:
- un retour d'effort électromagnétique (2), qui équipe préalablement la table de coupe (10), est piloté en intensité par l'unité de gestion en fonction de l'exercice sélectionné, de la dureté du matériau, de la position de la pièce à découper (70 à 74) et/ou des mouvements/orientations de l'opérateur pour interagir, pendant l'avancée de ladite pièce (70 à 74), avec au moins une face ferromagnétique (F1, F2) de cette pièce (70 à 74) afin d'exercer une résistance à l'avancement de la coupe correspondant à celle générée par une machine réelle de même type;
- au moins une zone de sécurité (Z1 à Z3) est projetée autour de l'organe de coupe (8b, 8b, 84) de ladite machine virtuelle (80), cette zone étant adaptée en dimensions à l'organe de coupe choisi (8b, 8b, 84), et une alerte est déclenchée en cas de franchissement d'au moins une zone de sécurité (Z1à Z3); et
- un niveau d'apprentissage de l'opérateur est évalué par une analyse de l'exécution de l'exercice sur la base de taux de réussite de critères portant sur la régularité de coupe et/ou la vitesse d'exécution, le positionnement de l'opérateur par rapport à un positionnement idéal et le respect sécuritaire au regard de la proximité de la ou des zones de sécurité (Z1 à Z3).

2. Procédé d'apprentissage selon la revendication 1, dans lequel un habillage (220, 230, 240) de la pièce à découper virtuellement (70 à 74) est également projetée en stéréoscopie sur cette pièce (70 à 74, l'habillage (200, 220, 230) couvrant aussi toute partie découpée au cours de l'exercice et les matériaux étant également définis dans la bibliothèque par leur texture correspondant audit habillage.

3. Procédé d'apprentissage selon l'une quelconque des revendications 1 ou 2, dans lequel lorsque le matériau de la pièce à découper est du bois, l'intensité du retour d'effort électromagnétique (2) est pondérée par une image de dureté du bois (210) en un point de coupe donné correspondant à la dureté moyenne d'une image de matière (200) extrudée perpendiculairement à la surface (11s) de la table (10) jusqu'au niveau de ce point par l'unité de gestion.

4. Procédé d'apprentissage selon l'une quelconque des revendications précédentes, dans lequel des vibrations correspondant à la coupe virtuelle de ladite pièce (70 à 74) sont également générées (3) au niveau de l'organe de coupe (8a à 8d) en fonction du choix de l'exercice, de la machine et dudit matériau de la pièce, et sont pilotées en intensité par l'unité de gestion.

5. Procédé d'apprentissage selon l'une quelconque des revendications précédentes, dans lequel un accompagnement sonore générique (5a, 5b) est prévu, cet accompagnement pouvant être modulé par l'intensité du retour d'effort électromagnétique (2) et des vibrations générées (3), à la dureté du bois et/ou à l'organe de coupe (8a à 8d).

6. Procédé d'apprentissage selon l'une quelconque des revendications précédentes, dans lequel la tête et les mains (8) de l'opérateur sont équipées (91) pour être captées en imagerie stéréoscopique infrarouge (IR) de suivi de positions, orientations et mouvements.

7. Procédé d'apprentissage selon l'une quelconque des revendications précédentes, dans lequel une zone d'accident (Z1) est définie dans la zone de sécurité à proximité immédiate de l'organe de coupe (8b, 8b, 84), et le retour d'effort (2) est arrêté et/ou l'exercice est stoppé lorsque l'opérateur franchit une des zones (Z1, Z2).

8. Procédé d'apprentissage selon l'une quelconque des revendications précédentes, dans lequel une zone d'ombre floutée est projetée en stéréoscopie au niveau des mains (8) de l'opérateur pour masquer la pièce à découpe (70 à 74).

9. Procédé d'apprentissage selon l'une quelconque des revendications 1 à 7, dans lequel un traitement de soustraction d'images des mains (8) de l'opérateur est réalisé dans l'imagerie de suivi par l'unité de gestion numérique pour masquer la pièce à découper (70 à 74) image par image.

10. Procédé d'apprentissage selon l'une quelconque des revendications précédentes, dans lequel l'unité de gestion est en communication avec un serveur (30) dédié qui stocke des données pédagogiques et des données communes dans l'exécution de différents exercices.

11. Procédé d'apprentissage selon la revendication précédente, dans lequel le serveur dédié (30) héberge un site de portail formateur accessible par une connexion via un réseau local ou Internet et est chargé, par l'unité de gestion, de délivrer des pages d'accès au portail formateur à au moins un terminal via un protocole d'accès, d'échanger les données avec l'unité de gestion et de stocker des données de résultats de compétence.

12. Procédé d'apprentissage selon l'une quelconque des revendications 10 ou 11, dans lequel la communication de données entre l'unité de gestion et le serveur (30) est choisie entre un mode autonome, dans lequel l'unité de gestion et le serveur (30) dédié sont accueillis sur un même site informatique, un mode connecté pour plusieurs unités de gestion dans lequel un site fonctionne en mode autonome et les autres unités de gestion sont connectées au serveur (30) via un réseau local et/ou Internet, et un mode serveur dans lequel le serveur (30) communique avec les unités de gestion via un réseau local et/ou Internet.

13. Plateforme hybride (1) d'apprentissage à la coupe de matériaux non métalliques par une machine stationnaire sur une table de découpe (10) pour la mise en oeuvre du procédé selon l'une quelconque des revendications précédentes, **caractérisé en ce qu'**elle comporte au moins une unité de gestion numérique d'exercices de coupe, un vidéoprojecteur stéréoscopique (60) de machines stationnaires de coupe (80), une caméra stéréoscopique (40) de suivi de positions, orientations et mouvements, un écran de commande et de contrôle (50) en liaison avec l'unité de gestion et au moins une pièce tangible (70 à 74) à découper virtuellement, **en ce que** l'unité de gestion intègre des bibliothèques de caractéristiques de fonctionnement de machines stationnaires de coupe (80), d'organes de coupe (8b, 8b, 84) correspondants et de matériaux à découper, les machines projetées (80) étant aptes à être visualisées par un opérateur équipé de lunettes de visualisation 3D (9), **en ce que** ledit vidéoprojecteur (60) est combiné en fonctionnement avec la caméra stéréoscopique (40) de suivi de ladite pièce tangible (70 à 74) et d'un opérateur exécutant un exercice de coupe sur ladite table (10), **en ce que** la caméra stéréoscopique de suivi (40) est associée à des marqueurs de position équipant ladite pièce et ledit opérateur, **en ce que** la plateforme (1) comporte également un électroaimant (2) piloté par l'unité de gestion, agencé au niveau des organes de coupe (8b, 8b, 84) et apte à interagir avec au moins une face (F3, F4) de la pièce à découper revêtue d'une couche ferromagnétique (7f), et **en ce qu'**au moins une zone de sécurité (Z1 à Z3) est projetée par le vidéoprojecteur (60) autour des organes de coupe (8b, 8b, 84) desdites machines (80).

14. Plateforme hybride selon la revendication précédente, dans laquelle les pièces à découper (70 à 74) sont habillées par des images (200, 220, 230, 240) présentant des textures de matériaux définis dans la bibliothèque des matériaux et projetés sur les pièces à découper (70 à 74) par le vidéoprojecteur stéréoscopique (60) en coopération avec la caméra stéréoscopique (40) de suivi de positions, orientations et mouvements des pièces à découper (70 à 74).

15. Plateforme hybride selon l'une quelconque des revendications 13 et 14, dans lequel un organe de vibrations (3) est agencé au niveau des organes de coupe (8b, 8b, 84) et est piloté par l'unité de gestion en fonction des exercices, des machines de coupe (80), des organes de coupe (8b, 8b, 84) et des densités des matériaux à découper.

16. Plateforme hybride selon la revendication précédente, dans laquelle au moins un haut-parleur (5a, 5b) est piloté par l'unité de gestion en fonction de l'intensité de l'électroaimant (2) et de l'organe de vibrations (3).

17. Plateforme hybride selon l'une quelconque des revendications 13 à 16, dans laquelle une alerte pilotée par l'unité de gestion est apte à stopper l'électroaimant et/ou l'exercice en cas de franchissement d'une des zones (Z1, Z2) située à l'intérieur de la zone de sécurité (Z3).

18. Plateforme hybride selon l'une quelconque des revendications 13 à 17, dans laquelle la table de coupe comporte un plateau (11) recouvert d'un revêtement hautement réfléchissant afin d'optimiser la projection stéréoscopique.

19. Plateforme hybride selon l'une quelconque des revendications 13 à 18, dans laquelle des organes modélisés mobiles, en particulier des protecteurs (82) d'organe de coupe (8b, 8b, 84) et des guides latéraux (110) des pièces à découper virtuellement associés à des moyens (11a, 11b; 13a, 13b) de réglage en position, sont projetés par le vidéoprojecteur (60).

20. Plateforme hybride selon l'une quelconque des revendications 13 à 19, dans laquelle des aides visuelles à la coupe peuvent être projetés par le vidéoprojecteur (60).

21. Plateforme hybride selon l'une quelconque des revendications 18 à 20, dans laquelle l'unité de gestion numérique est connecté à un serveur de stockage de données (30) pouvant être transmises via un réseau local ou Internet, l'unité de gestion et le serveur (30) étant disposés dans un rangement (E1) aménagé sous le plateau (11) ou à proximité de la table de coupe (10).

## Patentansprüche

1. Verfahren zum Lernen von Schneiden von nicht metallischen Materialien durch eine stationäre Maschine, umfassend die folgenden Schritte:
- wobei eine Schneidaufgabe in einer digitalen Steuereinheit ausgewählt wird, wird eine virtuelle stationäre Maschine (80), die in einer Bibliothek von Maschinen der Steuereinheit mit einem geeigneten Schneidelement (8a bis 8d) ausgewählt wird, stereoskopisch auf einen Schneidtisch (10) projiziert (60) und von einem Bediener, der mit einer dreidimensionalen 3D-Visualisierung ausgestattet ist, gesehen;
- gemäß der Aufgabe wird ein virtuell auszuschneidendes greifbares Teil (70 bis 74), dessen Position erkennbar ist, und das mindestens eine magnetische Interaktionsfläche (F1, F2) umfasst, virtuell aus einem Material gebildet, das in einer Bibliothek von Materialien der Steuereinheit ausgewählt wird, wobei die Materialien zumindest durch ein Härtebild (210) definiert sind;
- das virtuell auszuschneidende greifbare Teil (70 bis 74) und der Bediener sind ausgestattet (91), um in stereoskopischer Bildgebung (40) zur Positions-, Ausrichtungs- und Bewegungskontrolle erfasst zu werden;
wobei das Lernverfahren **dadurch gekennzeichnet ist, dass** es die folgenden Schritte umfasst:
- elektromagnetische Kraftrückkopplung (2), mit der der Schneidtisch (10) vorher ausgestattet wird, wird von der Steuereinheit im Hinblick auf die Stärke in Abhängigkeit von der ausgewählten Aufgabe, der Härte des Materials, der Position des auszuschneidenden Teils (70 bis 74) und/oder den Bewegungen/Ausrichtungen des Bedieners gesteuert, um während des Vorschubs des Teils (70 bis 74) mit mindestens einer ferromagnetischen Fläche (F1, F2) dieses Teils (70 bis 74) zu interagieren, um einen Widerstand gegen den Fortschritt des Schneidens entsprechend jenem, der von einer realen Maschine desselben Typs erzeugt wird, auszuüben;
- mindestens eine Sicherheitszone (Z1 bis Z3) wird um das Schneidelement (8b, 8b, 84) der virtuellen Maschine (80) projiziert, wobei diese Zone hinsichtlich der Abmessungen an das ausgewählte Schneidelement (8b, 8b, 84) angepasst ist, und ein Alarm wird im Falle einer Überschreitung mindestens einer Sicherheitszone (Z1 bis Z3) ausgelöst; und
- eine Lernstufe des Bedieners wird durch eine Analyse der Ausführung der Aufgabe auf Basis von Erfolgsraten von Kriterien, die die Schneidregelmäßigkeit und/oder die Ausführungsgeschwindigkeit, die Positionierung des Bedieners in Bezug zur idealen Positionierung und die Beachtung der Sicherheit im Hinblick auf die Nähe zu der oder den Sicherheitszonen (Z1 bis Z3) betreffen, evaluiert.

2. Lernverfahren nach Anspruch 1, bei dem eine Verkleidung (220, 230, 240) des virtuell auszuschneidenden Teils (70 bis 74) auch stereoskopisch auf dieses Teil (70 bis 74) projiziert wird, wobei die Verkleidung (200, 220, 230) auch den gesamten ausgeschnittenen Abschnitt während der Aufgabe bedeckt, und wobei die Materialien auch in der Bibliothek durch ihre Textur entsprechend der Verkleidung definiert werden.

3. Lernverfahren nach einem der Ansprüche 1 oder 2, bei dem, wenn das Material des auszuschneidenden Teils Holz ist, die Stärke der elektromagnetischen Kraftrückkopplung (2) durch ein Härtebild des Holzes (210) an einem gegebenen Schneidpunkt entsprechend der durchschnittlichen Härte eines extrudierten Materialbildes (200) senkrecht auf die Oberfläche (11s) des Tisches (10) bis zum Niveau dieses Punktes durch die Steuereinheit gewichtet wird.

4. Lernverfahren nach einem der vorhergehenden Ansprüche, bei dem die Schwingungen entsprechend dem virtuellen Schneiden des Teils (70 bis 74) auch im Bereich des Schneidelements (8a bis 8d) in Abhängigkeit von der Wahl der Aufgabe, der Maschine und des Materials des Teils erzeugt werden (3) und von der Steuereinheit hinsichtlich der Stärke gesteuert werden.

5. Lernverfahren nach einem der vorhergehenden Ansprüche, bei dem eine generische akustische Begleitung (5a, 5b) vorgesehen ist, wobei diese Begleitung durch die Stärke der elektromagnetischen Kraftrückkopplung (2) und der erzeugten Schwingungen (3) auf die Härte des Holzes und/oder auf das Schneidelement (8a bis 8d) moduliert werden kann.

6. Lernverfahren nach einem der vorhergehenden Ansprüche, bei dem der Kopf und die Hände (8) des Bedieners (91) ausgestattet sind, um in stereoskopischer Infrarotbildgebung (IR) zur Kontrolle von Positionen, Ausrichtungen und Bewegungen erfasst zu werden.

7. Lernverfahren nach einem der vorhergehenden Ansprüche, bei dem eine Unfallszone (Z1) in der Sicherheitszone in unmittelbarer Nähe des Schneidelements (8b, 8b, 84) definiert wird, und die Kraftrückkopplung (2) angehalten und/oder die Aufgabe gestoppt wird, wenn der Bediener eine der Zonen (Z1, Z2) übertritt.

8. Lernverfahren nach einem der vorhergehenden Ansprüche, bei dem eine unscharfe Schattenzone stereoskopisch im Bereich der Hände (8) des Bedieners projiziert wird, um das auszuschneidende Teil (70 bis 74) zu verbergen.

9. Lernverfahren nach einem der Ansprüche 1 bis 7, bei dem eine Bearbeitung des Entziehens von Bildern aus den Händen (8) des Bedieners in der Kontrollbildgebung durch die digitale Steuereinheit erfolgt, um das auszuschneidende Teil (70 bis 74) Bild für Bild zu verbergen.

10. Lernverfahren nach einem der vorhergehenden Ansprüche, bei dem die Steuereinheit mit einem speziellen Server (30) in Kommunikation ist, der pädagogische Daten und allgemeine Daten bei der Ausführung verschiedener Aufgaben speichert.

11. Lernverfahren nach dem vorhergehenden Anspruch, bei dem der spezielle Server (30) eine Bildungsportalseite beinhaltet, die durch einen Anschluss über ein lokales Netz oder Internet zugänglich ist und von der Steuereinheit den beauftragt ist, Zugangsseiten zu dem Bildungsportal an mindestens ein Endgerät über ein Zugangsprotokoll zu liefern, Daten mit der Steuereinheit auszutauschen und Daten von Kompetenzresultaten zu speichern.

12. Lernverfahren nach einem der Ansprüche 10 oder 11, bei dem die Datenkommunikation zwischen der Steuereinheit und dem Server (30) zwischen einem autonomen Modus, bei dem die Steuereinheit und der spezielle Server (30) auf einer selben Informatikseite aufgenommen sind, einem Anschlussmodus für mehrere Steuereinheiten, bei dem eine Seite im autonomen Modus funktioniert, und die anderen Steuereinheiten an den Server (30) über ein lokales Netz und/oder Internet angeschlossen sind, und einem Servermodus, bei dem der Server (30) mit den Steuereinheiten über ein lokales Netz und/oder Internet kommuniziert, ausgewählt ist.

13. Hybridlernplattform (1) für das Schneiden von nicht metallischen Materialien durch eine stationäre Maschine auf einem Schneidtisch (10) für den Einsatz des Verfahrens nach einem der vorhergehenden Ansprüche, **dadurch gekennzeichnet, dass** sie mindestens eine digitale Steuereinheit von Schneidaufgaben, einen stereoskopischen Videoprojektor (60) von stationären Schneidmaschinen (80), eine stereoskopische Kamera (40) zur Kontrolle von Positionen, Ausrichtungen und Bewegungen, einen Steuer- und Kontrollbildschirm (50) in Verbindung mit der Steuereinheit und mindestens ein virtuell auszuschneidendes greifbares Teil (70 bis 74) umfasst, dass die Steuereinheit Bibliotheken von Funktionsmerkmalen von stationären Schneidmaschinen (80), von entsprechenden Schneidelementen (8b, 8b, 84) und von auszuschneidenden Materialien einschließt, wobei die projizierten Maschinen (80) geeignet sind, von einem mit 3D-Visualisierungsbrillen (9) ausgestatteten Bediener visualisiert zu werden, dass der Videoprojektor (60) in Funktion mit der stereoskopischen Kamera (40) zur Kontrolle des greifbaren Teils (70 bis 74) und eines Bedieners, der eine Schneidaufgabe auf dem Tisch (10) ausführt, kombiniert ist, dass die stereoskopische Kontrollkamera (40) Positionsmarkierungen, mit denen das Teil und der Bediener ausgestattet sind, zugeordnet ist, dass die Plattform (1) auch einen Elektromagneten (2) umfasst, der von der Steuereinheit gesteuert wird, der im Bereich der Schneidelemente (8b, 8b, 84) angeordnet und geeignet ist, mit mindestens einer Seite (F3, F4) des mit einer ferromagnetischen Schicht (7f) überzogenen auszuschneidenden Teils zu interagieren, und dass mindestens eine Sicherheitszone (Z1 bis Z3) vom Videoprojektor (60) um die Schneidelemente (8b, 8b, 84) der Maschinen (80) projiziert wird.

14. Hybridplattform nach dem vorhergehenden Anspruch, bei der die auszuschneidenden Teile (70 bis 74) mit Bildern (200, 220, 230, 240) verkleidet sind, die Texturen von Materialien aufweisen, die in der Bibliothek der Materialien definiert sind, und die auf die auszuschneidenden Teile (70 bis 74) vom stereoskopischen Videoprojektor (60) im Zusammenwirken mit der stereoskopischen Kamera (40) zur Kontrolle von Positionen, Ausrichtungen und Bewegungen der auszuschneidenden Teile (70 bis 74) projiziert werden.

15. Hybridplattform nach einem der Ansprüche 13 und 14, bei der ein Schwingungselement (3) im Bereich der Schneidelemente (8b, 8b, 84) angeordnet ist und von der Steuereinheit in Abhängigkeit von den Aufgaben, den Schneidmaschinen (80), den Schneidelementen (8b, 8b, 84) und den Dichten der auszuschneidenden Materialien gesteuert wird.

16. Hybridplattform nach dem vorhergehenden Anspruch, bei der mindestens ein Lautsprecher (5a, 5b) von der Steuereinheit in Abhängigkeit von der Stärke des Elektromagneten (2) und des Schwingungselements (3) gesteuert wird.

17. Hybridplattform nach einem der Ansprüche 13 bis 16, bei der ein von der Steuereinheit gesteuerter Alarm geeignet ist, den Elektromagneten und/oder die Aufgabe im Fall einer Überschreibung einer der Zonen (Z1, Z2), die sich innerhalb der Sicherheitszone (Z3) befinden, zu stoppen.

18. Hybridplattform nach einem der Ansprüche 13 bis 17, bei der der Schneidtisch eine Platte (11) umfasst, die mit einer stark reflektierenden Verkleidung überzogen ist, um die stereoskopische Projektion zu optimieren.

19. Hybridplattform nach einem der Ansprüche 13 bis 18, bei der bewegliche modellierte Elemente, insbesondere Protektoren (82) eines Schneidelements (8b, 8b, 84) und seitliche Führungen (110) des virtuell auszuschneidenden Teils, die Mitteln (11a, 11b; 13a, 13b) zur Positionseinstellung zugeordnet sind, vom Videoprojektor (60) projiziert werden.

20. Hybridplattform nach einem der Ansprüche 13 bis 19, bei der visuelle Hilfsmittel zum Schneiden vom Videoprojektor (60) projiziert werden können.

21. Hybridplattform nach einem der Ansprüche 18 bis 20, bei der die digitale Steuereinheit an einen Server zur Speicherung von Daten (30) angeschlossen ist, die über ein lokales Netz oder Internet übertragen werden können, wobei die Steuereinheit und der Server (30) in einem Lagerraum (E1) angeordnet sind, der unter der Platte (11) oder in der Nähe des Schneidtisches (10) angeordnet ist.

## Claims

1. A method for learning cutting of non-metallic materials by a static machine, comprising the following steps:
- a cutting exercise being selected in a digital management unit, a virtual static machine (80), chosen in a library of machines of the management unit with an appropriate cutting mechanism (8a to 8d), is projected (60) as a stereoscopic image onto a cutting table (10) and seen by an operator equipped with a three-dimensional 3D display;
- according to the exercise, a tangible workpiece (70 to 74) to be virtually cut up, detectable in position and comprising at least one magnetic interaction face (F1, F2), is virtually constituted by a material chosen within a library of materials of the management unit, the materials being defined by at least one hardness image (210);
- the tangible workpiece to be virtually cut up (70 to 74) and the operator are equipped (91) so as to be captured by stereoscopic imaging (40) for tracking positions, orientations and movements;
the learning process **characterised in that** it comprises the following steps:
- an electromagnetic reaction force (2), which initially equips the cutting table (10), is controlled in intensity by the management unit according to the exercise selected, to the hardness of the material, to the position of the workpiece to be cut up (70 to 74) and/or to the movements/orientations of the operator so as to interact, during the advance of said workpiece (70 to 74), with at least one ferromagnetic face (F1, F2) of this workpiece (70 to 74) in order to exert a resistance to the advance of the cut corresponding to that generated by a real machine of the same type;
- at least one safety area (Z1 to Z3) is projected around the cutting mechanism (8b, 8b, 84) of said virtual machine (80), the dimensions of this area being adapted to the cutting mechanism chosen (8b, 8b, 84), and an alarm is triggered in the case of infringement of at least one safety area (Z1 to Z3); and
- a learning level of the operator is evaluated by an analysis of the execution of the exercise on the basis of rate of success of criteria relating to the cut regularity and/or the speed of execution, the positioning of the operator with respect to an ideal positioning and the adherence to safety with regard to the proximity of the safety area or areas (Z1 to Z3).

2. The learning method as claimed in claim 1, in which a cladding (220, 230, 240) of the workpiece to be virtually cut up (70 to 74) is also projected as a stereoscopic image onto this workpiece (70 to 74), the cladding (200, 220, 230) also covering any part cut off in the course of the exercise and the materials also being defined in the library by their texture corresponding to said cladding.

3. The learning method as claimed in either one of claims 1 and 2, in which when the material of the workpiece to be cut up is wood, the intensity of the electromagnetic reaction force (2) is weighted by a hardness image of the wood (210) at a given cut point corresponding to the mean hardness of an image of material (200) extruded perpendicularly to the surface (11s) of the table (10) up to the level of this point by the management unit.

4. The learning method as claimed in any one of the preceding claims, in which vibrations corresponding to the virtual cutting of said workpiece (70 to 74) are also generated (3) on the cutting mechanism (8a to 8d) as a function of the choice of the exercise, of the machine and of said material of the workpiece, and whose intensity is controlled by the management unit.

5. The learning method as claimed in any one of the preceding claims, in which a generic audio accompaniment (5a, 5b) is provided, where this accompaniment can be modulated by the intensity of the electromagnetic reaction force (2) and vibrations generated (3), to the hardness of the wood and/or to the cutting mechanism (8a to 8d).

6. The learning method as claimed in any one of the preceding claims, in which the head and the hands (8) of the operator are equipped (91) so as to be sensed by infrared (IR) stereoscopic imaging for tracking positions, orientations and movements.

7. The learning method as claimed in any one of the preceding claims, in which an accident area (Z1) is defined within the safety area in the immediate proximity of the cutting mechanism (8b, 8b, 84), and the reaction force (2) is stopped and/or the exercise is halted when the operator infringes on one of the areas (Z1, Z2).

8. The learning method as claimed in any one of the preceding claims, in which a fuzzy shadow area is projected as a stereoscopic image onto the hands (8) of the operator in order to mask the workpiece to be cut up (70 to 74).

9. The learning method as claimed in any one of claims 1 to 7, in which a processing for subtraction of images of the hands (8) of the operator is carried out in the monitoring imaging by the digital management unit in order to mask the workpiece to be cut up (70 to 74) image by image.

10. The learning method as claimed in any one of the preceding claims, in which the management unit is in communication with a dedicated server (30) which stores teaching data and common data in the execution of various exercises.

11. The learning method as claimed in the preceding claim, in which the dedicated server (30) hosts a training portal site accessible by a connection via a local network or the Internet and is made responsible, by the management unit, for delivering pages for access to the training portal to at least one terminal via an access protocol, for exchanging data with the management unit and for storing skills results data.

12. The learning method as claimed in either one of claims 10 and 11, in which the communication of data between the management unit and the server (30) is chosen from between an autonomous mode, in which the management unit and the dedicated server (30) are hosted on the same website, a connected mode for several management units in which a site operates in autonomous mode and the other management units are connected to the server (30) via a local network and/or the Internet, and a server mode in which the server (30) communicates with the management units via a local network and/or the Internet.

13. A hybrid platform (1) for learning the cutting of non-metallic materials by a static machine on a cutting table (10) for the implementation of the method as claimed in any one of the preceding claims, **characterized in that** it comprises at least one digital unit for the management of cutting exercises, a stereoscopic videoprojector (60) of static cutting machines (80), a stereoscopic camera (40) for tracking positions, orientations and movements, a control and monitoring screen (50) in communication with the management unit and at least one tangible workpiece (70 to 74) to be virtually cut up, **in that** the management unit incorporates libraries of operational characteristics of static cutting machines (80), of corresponding cutting mechanisms (8b, 8b, 84) and of materials to be cut up, the projected machines (80) being able to be viewed by an operator equipped with 3D display glasses (9), **in that** said videoprojector (60) is combined in operation with the stereoscopic camera (40) for monitoring said tangible workpiece (70 to 74) and an operator executing a cutting exercise on said table (10), **in that** the stereoscopic monitoring camera (40) is associated with position markers equipping said workpiece and said operator, **in that** the platform (1) also comprises an electromagnet (2) controlled by the management unit, arranged on the cutting mechanisms (8b, 8b, 84) and designed to interact with at least one face (F3, F4) of the workpiece to be cut up covered with a ferromagnetic layer (7f), and **in that** at least one safety area (Z1 to Z3) is projected by the videoprojector (60) around the cutting mechanisms (8b, 8b, 84) of said machines (80).

14. The hybrid platform as claimed in the preceding claim, in which the workpieces to be cut up (70 to 74) are clad by images (200, 220, 230, 240) exhibiting textures of materials defined in the library of materials and projected onto the workpieces to be cut up (70 to 74) by the stereoscopic videoprojector (60) in cooperation with the stereoscopic camera (40) for tracking positions, orientations and movements of the workpieces to be cut up (70 to 74).

15. The hybrid platform as claimed in any one of claims 13 and 14, in which a vibrating mechanism (3) is arranged on the cutting mechanisms (8b, 8b, 84) and is controlled by the management unit according to the exercises, to the cutting machines (80), to the cutting mechanisms (8b, 8b, 84) and to the densities of the materials to be cut up.

16. The hybrid platform as claimed in the preceding claim, in which at least one loudspeaker (5a, 5b) is controlled by the management unit as a function of the intensity of the electromagnet (2) and of the vibrating mechanism (3).

17. The hybrid platform as claimed in any one of claims 13 to 16, in which an alarm controlled by the management unit is able to stop the electromagnet and/or the exercise in the case of an encroachment into one of the areas (Z1, Z2) situated inside of the safety area (Z3).

18. The hybrid platform as claimed in any one of claims 13 to 17, in which the cutting table comprises a worktop (11) covered with a highly reflecting coating in order to optimize the stereoscopic projection.

19. The hybrid platform as claimed in any one of claims 13 to 18, in which modeled mobile mechanisms, in particular cutting mechanism (8b, 8b, 84) protectors (82) and lateral guides (110) for the tangible workpieces to be virtually cut up associated with positional adjustment means (11a, 11b; 13a, 13b), are projected by the videoprojector (60).

20. The hybrid platform as claimed in any one of claims 13 to 19, in which visual aids for the cutting may be projected by the videoprojector (60).

21. The hybrid platform as claimed in any one of claims 18 to 20, in which the digital management unit is connected to a server (30) for storing data that may be transmitted via a local network or the Internet, the management unit and the server (30) being disposed on a shelf (E1) installed under the worktop (11) or near to the cutting table (10).
